# EUROPEAN PATENT APPLICATION

(11) **EP 4 580 118 A1**
(43) Date of publication of application: **02.07.2025**
(21) Application number: 23857044.4
(22) Date of filing: 19.07.2023
(51) Int. Cl.: H04L 9/32, E05B 49/00, G06F 21/33

(54) **INFORMATION PROCESSING SYSTEM, CONTROL DEVICE, AND INFORMATION PROCESSING METHOD**

(30) Priority: 26.08.2022 JP 2022134937
(71) Applicant: Panasonic Intellectual Property Management Co., Ltd., Kadoma-shi, Osaka 571-0057 (JP)
(72) Inventor: KURAMAE, Kenji, Kadoma-shi, 571-0057 Osaka (JP); AKIMOTO, Masao, Kadoma-shi, 571-0057 Osaka (JP)
(74) Representative: Appelt, Christian W.
(86) International application number: PCT/JP2023/026478
(87) International publication number: WO 2024/042928

(57) **Abstract**

An information processing system (10) includes a management terminal (30) and a control device (50). The control device (50): receives the current time information and the server certificate from management terminal (30); verifies the signature included in the server certificate received, using the public key included in the root certificate stored in storage (53), and lifts the restriction imposed by the device, on condition that the signature is successfully verified and the current time indicated by the current time information received satisfies the time period requirement included in the server certificate received.

## Description

### [Technical Field]

The present invention relates to an information processing system, a control device, and an information processing method.

### [Background Art]

Security systems for locking or unlocking facility doors are conventionally known. Patent Literature (PTL) 1 discloses a security system that can safely and remotely lock and unlock a house without requiring other devices such as a fingerprint authentication device.

### [Citation List]

### [Patent Literature]

[PTL 1] Japanese Unexamined Patent Application Publication No. 2014-159692

### [Summary of Invention]

### [Technical Problem]

The present invention provides an information processing system, etc. capable of lifting a restriction on the entry or exit of a product or a person in consideration of a time period requirement.

### [Solution to Problem]

An information processing system according to one aspect of the present invention is an information processing system that is used to lift a restriction imposed by a device which restricts entry or exit of a product or a person to or from a space, the information processing system including: an information terminal; and a control device. In the information processing system, the information terminal includes: a first time manager that manages a current time; a first storage in which a private key, a public key corresponding to the private key, and a server certificate are stored; and a first communicator that transmits current time information and the server certificate to the control device, the current time information indicating the current time, the server certificate includes the public key, a time period requirement, and a signature for the public key and the time period requirement, the signature being generated using the private key, and the control device includes: a second storage in which a root certificate including the public key is stored; a second communicator that receives the current time information and the server certificate from the information terminal; and a controller that verifies the signature included in the server certificate received, using the public key included in the root certificate stored in the second storage, and lifts the restriction imposed by the device, on condition that the signature is successfully verified and the current time indicated by the current time information received satisfies the time period requirement included in the server certificate received.

An information processing system according to one aspect of the present invention is an information processing system that is used to lift a restriction imposed by a device which restricts entry or exit of a product or a person to or from a space, the information processing system including: an information terminal; and a control device. In the information processing system, the information terminal includes: a first time manager that manages a current time; a first storage in which a first private key, a first public key corresponding to the first private key, and a server certificate are stored; and a first communicator that transmits current time information and the server certificate to the control device, the current time information indicating the current time, the server certificate includes the first public key, a time period requirement, and a signature for the first public key and the time period requirement, the signature being generated using a second private key, and the control device includes: a second storage in which a root certificate including a second public key corresponding to the second private key is stored; a second communicator that receives the current time information and the server certificate from the information terminal; and a controller that verifies the signature included in the server certificate received, using the second public key included in the root certificate stored in the second storage, and lifts the restriction imposed by the device, on condition that the signature is successfully verified and the current time indicated by the current time information received satisfies the time period requirement included in the server certificate received.

An information processing system according to one aspect of the present invention is an information processing system that is used to lift a restriction imposed by a device which restricts entry or exit of a product or a person to or from a space, the information processing system including: an information terminal; and a control device. In the information processing system, the information terminal includes: a first time manager that manages a current time; a first storage in which a first private key, a first public key corresponding to the first private key, an intermediate certificate, and a server certificate are stored; and a first communicator that transmits current time information, the intermediate certificate, and the server certificate to the control device, the current time information indicating the current time, the intermediate certificate includes a third public key, a first time period requirement, and a first signature for the third public key and the first time period requirement, the first signature being generated using a second private key, the server certificate includes the first public key, a second time period requirement, and a second signature for the first public key and the second time period requirement, the second signature being generated using a third private key corresponding to the third public key, the control device includes: a second time manager that manages a current time; a second storage in which a root certificate including a second public key corresponding to the second private key is stored; a second communicator that receives the current time information, the server certificate, and the intermediate certificate from the information terminal; and a controller that: verifies the first signature included in the intermediate certificate received, using the second public key included in the root certificate; verifies the second signature included in the server certificate received, using the third public key included in the intermediate certificate; and lifts the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received.

A control device according to one aspect of the present invention is a control device that communicates with an information terminal to lift a restriction imposed by a device which restricts entry or exit of a product or a person to or from a space, the information terminal including: a first time manager that manages a current time; a first storage in which a private key, a public key corresponding to the private key, and a server certificate are stored; and a first communicator that transmits current time information and the server certificate to the control device, the current time information indicating the current time, the server certificate including the public key, a time period requirement, and a signature for the public key and the time period requirement, the signature being generated using the private key. The control device includes: a second storage in which a root certificate including the public key is stored; a second communicator that receives the current time information and the server certificate from the information terminal; and a controller that verifies the signature included in the server certificate received, using the public key included in the root certificate stored in the second storage, and lifts the restriction imposed by the device, on condition that the signature is successfully verified and the current time indicated by the current time information received satisfies the time period requirement included in the server certificate received.

A control device according to one aspect of the present invention is a control device that communicates with an information terminal to lift a restriction imposed by a device which restricts entry or exit of a product or a person to or from a space, the information terminal including: a first time manager that manages a current time; a first storage in which a first private key, a first public key corresponding to the first private key, and a server certificate are stored; and a first communicator that transmits current time information and the server certificate to the control device, the current time information indicating the current time, the server certificate including the first public key, a time period requirement, and a signature for the first public key and the time period requirement, the signature being generated using a second private key. The control device includes: a second storage in which a root certificate including a second public key corresponding to the second private key is stored; a second communicator that receives the current time information and the server certificate from the information terminal; and a controller that verifies the signature included in the server certificate received, using the second public key included in the root certificate stored in the second storage, and lifts the restriction imposed by the device, on condition that the signature is successfully verified and the current time indicated by the current time information received satisfies the time period requirement included in the server certificate received.

A control device according to one aspect of the present invention is a control device that communicates with an information terminal to lift a restriction imposed by a device which restricts entry or exit of a product or a person to or from a space, the information terminal including: a first time manager that manages a current time; a first storage in which a first private key, a first public key corresponding to the first private key, an intermediate certificate, and a server certificate are stored; and a first communicator that transmits current time information, the intermediate certificate, and the server certificate to the control device, the current time information indicating the current time, the intermediate certificate including a third public key, a first time period requirement, and a first signature for the third public key and the first time period requirement, the first signature being generated using a second private key, the server certificate including the first public key, a second time period requirement, and a second signature for the first public key and the second time period requirement, the second signature being generated using a third private key corresponding to the third public key. The control device includes: a second time manager that manages a current time; a second storage in which a root certificate including a second public key corresponding to the second private key is stored; a second communicator that receives the current time information, the server certificate, and the intermediate certificate from the information terminal; and a controller that: verifies the first signature included in the intermediate certificate received, using the second public key included in the root certificate; verifies the second signature included in the server certificate received, using the third public key included in the intermediate certificate; and lifts the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received.

An information processing method according to one aspect of the present invention is an information processing method executed by an information processing system that is used to lift a restriction imposed by a device which restricts entry or exit of a product or a person to or from a space, the information processing system including an information terminal and a control device, the information terminal including: a first time manager that manages a current time; and a first storage in which a private key, a public key corresponding to the private key, and a server certificate are stored, the server certificate including the public key, a time period requirement, and a signature for the public key and the time period requirement, the signature being generated using the private key, the control device including a second storage in which a root certificate including the public key is stored. The information processing method includes: transmitting, by the information terminal, current time information and the server certificate to the control device, the current time information indicating the current time; receiving, by the control device, the current time information and the server certificate from the information terminal; and verifying, by the control device, the signature included in the server certificate received, using the public key included in the root certificate stored in the second storage, and lifting, by the control device, the restriction imposed by the device, on condition that the signature is successfully verified and the current time indicated by the current time information received satisfies the time period requirement included in the server certificate received.

An information processing method according to one aspect of the present invention is an information processing method executed by an information processing system that is used to lift a restriction imposed by a device which restricts entry or exit of a product or a person to or from a space, the information processing system including an information terminal and a control device, the information terminal including: a first time manager that manages a current time; and a first storage in which a first private key, a first public key corresponding to the first private key, and a server certificate are stored, the server certificate including the first public key, a time period requirement, and a signature for the first public key and the time period requirement, the signature being generated using a second private key, the control device including a second storage in which a root certificate including a second public key corresponding to the second private key is stored. The information processing method includes: transmitting, by the information terminal, current time information and the server certificate to the control device, the current time information indicating the current time; receiving, by the control device, the current time information and the server certificate from the information terminal; and verifying, by the control device, the signature included in the server certificate received, using the second public key included in the root certificate stored in the second storage, and lifting, by the control device, the restriction imposed by the device, on condition that the signature is successfully verified and the current time indicated by the current time information received satisfies the time period requirement included in the server certificate received.

An information processing method according to one aspect of the present invention is an information processing method executed by an information processing system that is used to lift a restriction imposed by a device which restricts entry or exit of a product or a person to or from a space, the information processing system including an information terminal and a control device, the information terminal including: a first time manager that manages a current time; and a first storage in which a first private key, a first public key corresponding to the first private key, an intermediate certificate, and a server certificate are stored, the intermediate certificate including a third public key, a first time period requirement, and a first signature for the third public key and the first time period requirement, the first signature being generated using a second private key, the server certificate including the first public key, a second time period requirement, and a second signature for the first public key and the second time period requirement, the second signature being generated using a third private key corresponding to the third public key, the control device including: a second time manager that manages a current time; and a second storage in which a root certificate including a second public key corresponding to the second private key is stored. The information processing method includes: transmitting, by the information terminal, current time information, the intermediate certificate, and the server certificate to the control device, the current time information indicating the current time; receiving, by the control device, the current time information, the server certificate, and the intermediate certificate from the information terminal; and verifying, by the control device, the first signature included in the intermediate certificate received, using the second public key included in the root certificate; verifying, by the control device, the second signature included in the server certificate received, using the third public key included in the intermediate certificate; and lifting, by the control device, the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received.

A program according to one aspect of the present invention is a program for causing a computer to execute the information processing method described above.

### [Advantageous Effects of Invention]

An information processing system, etc. according to one aspect of the present invention are capable of lifting a restriction on the entry or exit of a product or a person in consideration of a time period requirement.

### [Brief Description of Drawings]

[FIG. 1]

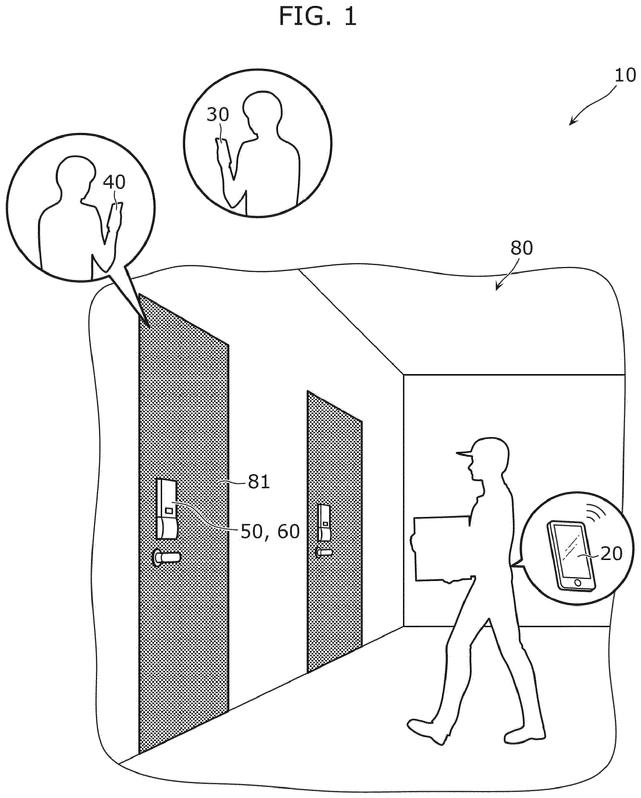

   FIG. 1 is an external view of an information processing system according to an embodiment.
[FIG. 2]

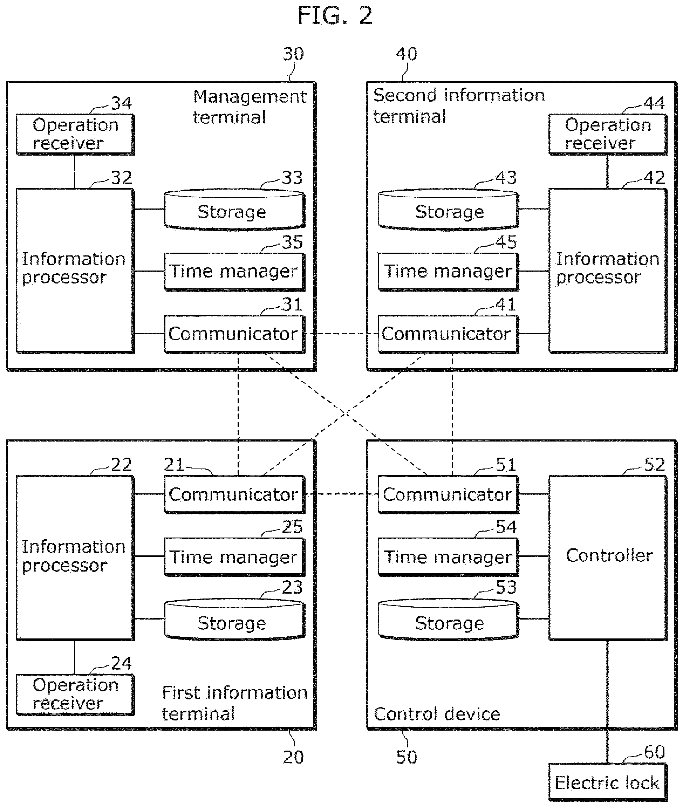

   FIG. 2 is a block diagram illustrating a functional configuration of the information processing system according to the embodiment.
[FIG. 3]

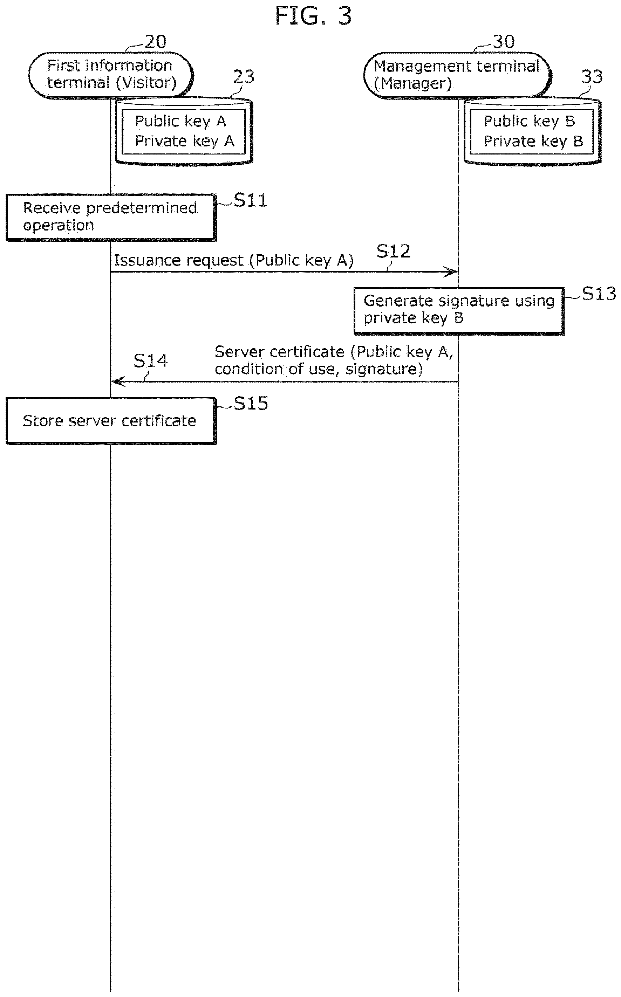

   FIG. 3 is a sequence diagram of the first half of operation example 1 of the information processing system according to the embodiment.
[FIG. 4]

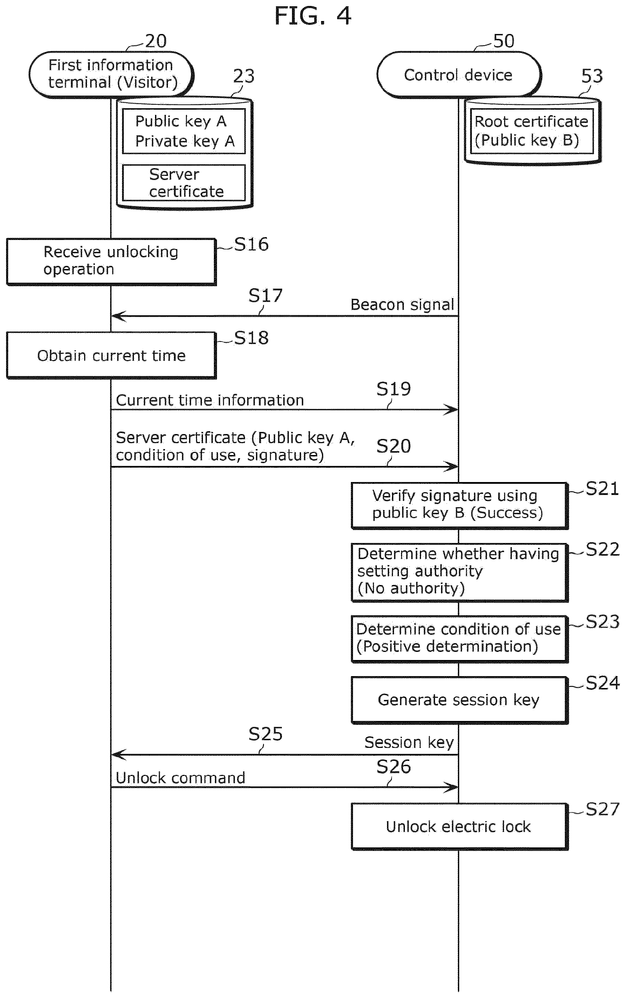

   FIG. 4 is a sequence diagram of the second half of operation example 1 of the information processing system according to the embodiment.
[FIG. 5]

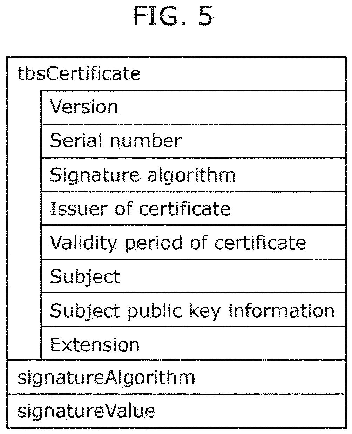

   FIG. 5 is a diagram illustrating an example of the format of a server certificate.
[FIG. 6]

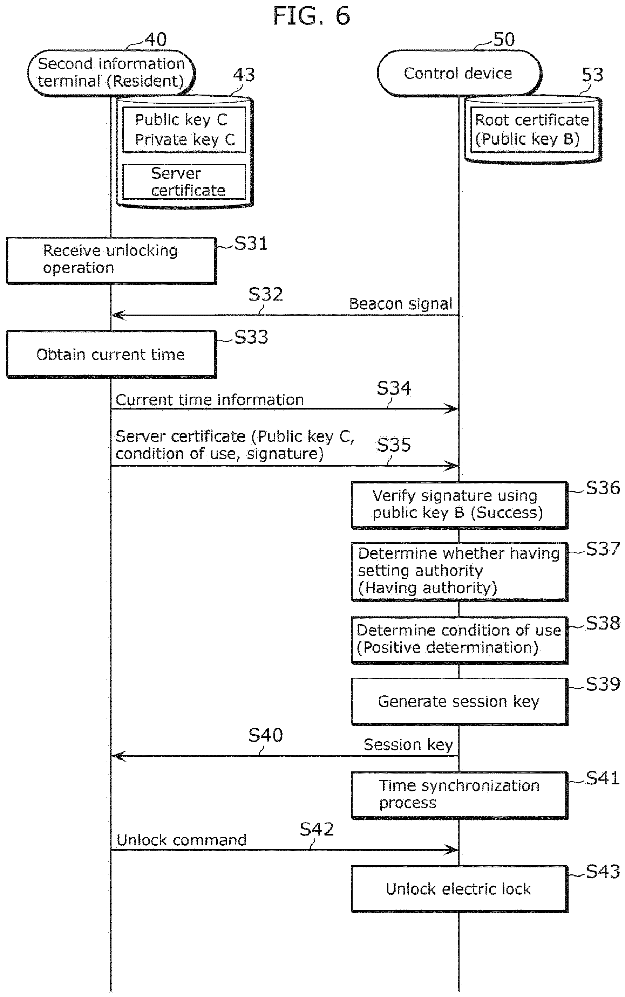

   FIG. 6 is a sequence diagram of operation example 2 of the information processing system according to the embodiment.
[FIG. 7]

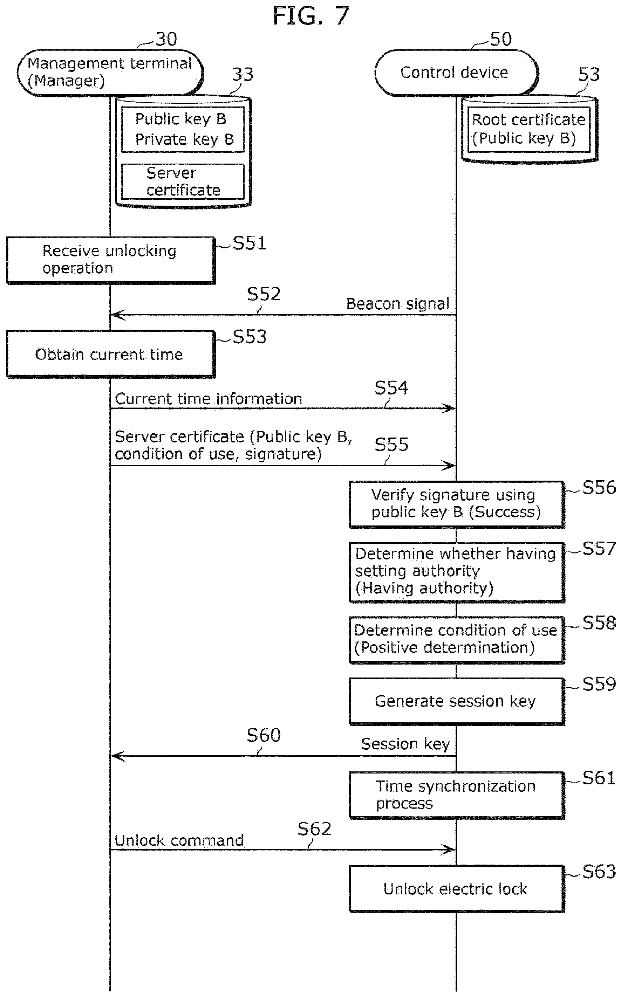

   FIG. 7 is a sequence diagram of operation example 3 of the information processing system according to the embodiment.
[FIG. 8]

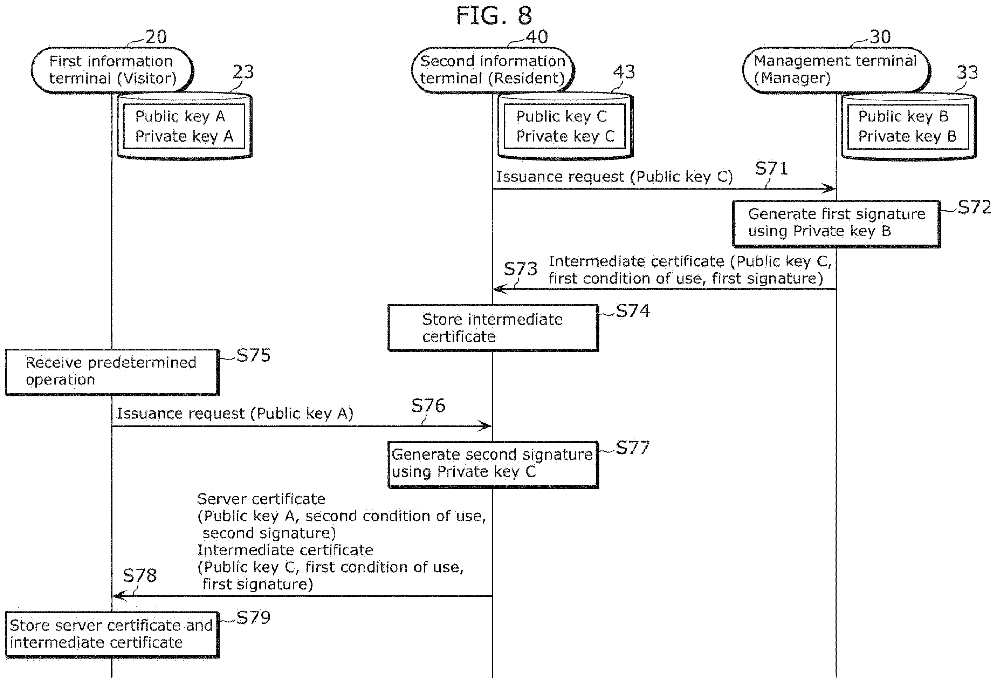

   FIG. 8 is a sequence diagram of the first half of operation example 4 of the information processing system according to the embodiment.
[FIG. 9]

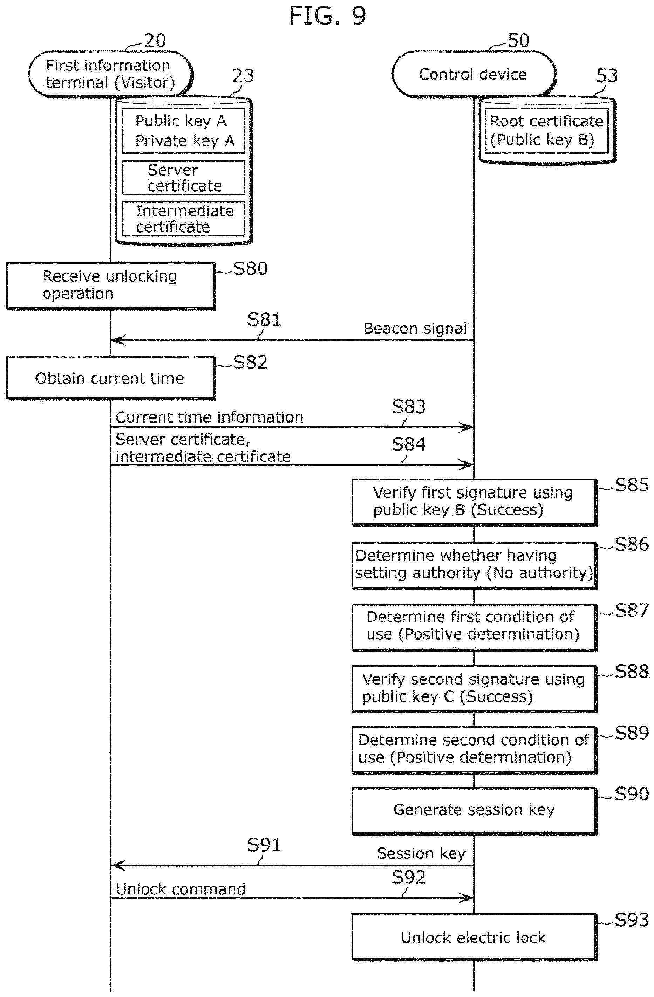

   FIG. 9 is a sequence diagram of the second half of operation example 4 of the information processing system according to the embodiment.
[FIG. 10]

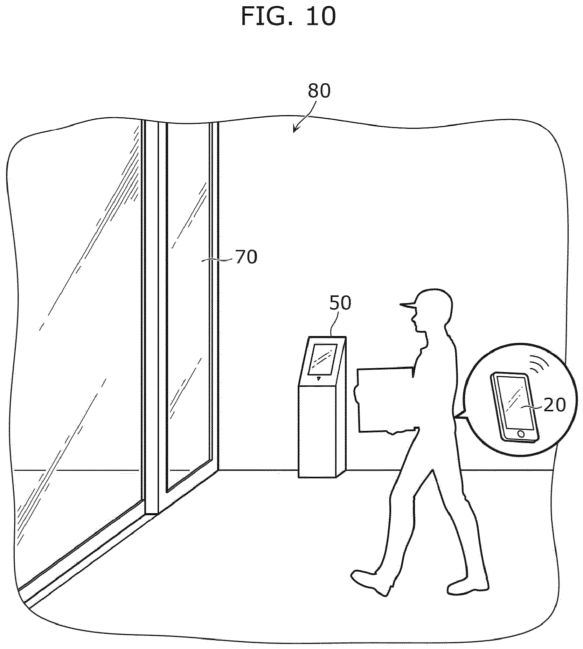

   FIG. 10 is an external view of a control device according to a variation.

### [Description of Embodiments]

Hereinafter, embodiments will be described in detail with reference to the Drawings. It should be noted that the embodiments described below each show a general or specific example. The numerical values, shapes, materials, structural components, the arrangement and connection of the structural components, steps, the processing order of the steps, and so on, shown in the following embodiments are mere examples, and therefore do not limit the present invention. Among the structural components in the embodiments described below, those not recited in the independent claims will be described as optional structural components.

In addition, each of the diagrams is a schematic diagram and not necessarily strictly illustrated. In each of the diagrams, substantially the same structural components are assigned with the same reference signs, and there are instances where redundant descriptions are omitted or simplified.

### (Embodiment)

### Configuration

First, the configuration of an information processing system according to an embodiment will be described. FIG. 1 is an external view of the information processing system according to the embodiment. FIG. 2 is a block diagram illustrating a functional configuration of the information processing system according to the embodiment.

As illustrated in FIG. 1, information processing system 10 according to the embodiment is a system for safely unlocking electric lock 60 using first information terminal 20, management terminal 30, and second information terminal 40. Information processing system 10 includes: first information terminal 20; management terminal 30; second information terminal 40; control device 50; and electric lock 60. Control device 50 and electric lock 60 are provided, for example, on door 81 (or a door frame) in facility 80 as an electric lock system. Facility 80 is, for example, a complex housing, but it may be a non-residential facility such as an office building.

First information terminal 20 is an information terminal that is used by a visitor to facility 80 to unlock electric lock 60. First information terminal 20 is a portable information terminal, such as a smartphone or a tablet device. First information terminal 20 includes communicator 21, information processor 22, storage 23, operation receiver 24, and time manager 25.

Communicator 21 is a communication circuit for first information terminal 20 to communicate with each of management terminal 30, second information terminal 40, and control device 50. Communicator 21, for example, performs wireless communication with management terminal 30 and second information terminal 40 through a wide area communication network such as the Internet, and performs wireless communication with control device 50 through a local communication network.

Information processor 22 performs information processing, etc. for unlocking electric lock 60. Information processor 22 is implemented by, for example, a microcomputer, but may also be implemented by a processor. The functions of information processor 22 are implemented by, for example, executing a computer program stored in storage 23, by a microcomputer, processor, or the like included in information processor 22.

Storage 23 is a storage device in which information necessary for the above-described information processing and the above-described computer program, etc. are stored. Storage 23 is implemented, for example, by a semiconductor memory.

Operation receiver 24 receives an operation performed by a visitor. Operation receiver 24 is implemented by, for example, a touch panel, but may also be implemented by a hardware key, etc.

Time manager 25 manages a current time used in first information terminal 20. Stated differently, time manager 25 measures the current time. Time manager 25 is implemented by, for example, a real time clock (RTC). When first information terminal 20 supports Network Identity and Time Zone (NITZ), the current time managed by time manager 25 is corrected periodically. It should be noted that time manager 25 may be included in information processor 22. In other words, time manager 25 may be implemented as a function of information processor 22.

Management terminal 30 is an information terminal used by a manager or the like of facility 80. The manager or the like is, for example, an owner of facility 80 or an employee of a facility management agent for facility 80. Management terminal 30 is, for example, a portable information terminal, such as a smartphone or a tablet device. Management terminal 30 includes communicator 31, information processor 32, storage 33, operation receiver 34, and time manager 35.

Communicator 31 is a communication circuit for management terminal 30 to communicate with each of first information terminal 20, second information terminal 40, and control device 50. Communicator 31 performs, for example, wireless communication with each of first information terminal 20, second information terminal 40, and control device 50 through a wide area communication network. The communication that communicator 31 performs with control device 50 for unlocking electric lock 60 is wireless communication through a local communication network.

Information processor 32 performs, for example, information processing for authorizing first information terminal 20 or second information terminal 40 to unlock electric lock 60, and information processing for unlocking electric lock 60. The information processing for authorizing first information terminal 20 or second information terminal 40 to unlock electric lock 60 is, for example, the processing of issuing a server certificate to first information terminal 20 or second information terminal 40 (described below). Information processor 32 is implemented by, for example, a microcomputer, but may also be implemented by a processor. The functions of information processor 32 are implemented by, for example, executing a computer program stored in storage 33, by a microcomputer, processor, or the like included in information processor 32.

Storage 33 is a storage device in which information necessary for the above-described information processing and the above-described computer program, etc. are stored. Storage 33 is implemented, for example, by a semiconductor memory.

Operation receiver 34 receives an operation performed by a manager or the like. Operation receiver 34 is implemented by, for example, a touch panel, but may also be implemented by a hardware key, etc.

Time manager 35 manages a current time used in management terminal 30. Stated differently, time manager 35 measures the current time. Time manager 35 is implemented by, for example, an RTC. When management terminal 30 supports NITZ, the current time managed by time manager 35 is corrected periodically. It should be noted that time manager 35 may be included in information processor 32. In other words, time manager 35 may be implemented as a function of information processor 32.

Second management device 40 is an information terminal used by a resident or the like of facility 80. Second management device 40 is, for example, a portable information terminal, but may also be a stationary information terminal such as a personal computer or a server device. Second information terminal 40 includes communicator 41, information processor 42, storage 43, operation receiver 44, and time manager 45.

Communicator 41 is a communication circuit for second information terminal 40 to communicate with each of first information terminal 20, management terminal 30, and control device 50. Communicator 41, for example, performs wireless communication with first information terminal 20 and management terminal 30 through a wide area communication network, and performs wireless communication with control device 50 through a local communication network.

Information processor 42 performs, for example, information processing for authorizing first information terminal 20 to unlock electric lock 60, and information processing for unlocking electric lock 60. The information processing for authorizing first information terminal 20 to unlock electric lock 60 is, for example, the processing of issuing an intermediate certificate to first information terminal 20 (described below). Information processor 42 is implemented by, for example, a microcomputer, but may also be implemented by a processor. The functions of information processor 42 are implemented by, for example, executing a computer program stored in storage 43, by a microcomputer, processor, or the like included in information processor 42.

Storage 43 is a storage device in which information necessary for the above-described information processing and the above-described computer program, etc. are stored. Storage 43 is implemented, for example, by a semiconductor memory.

Operation receiver 44 receives an operation performed by a resident. Operation receiver 44 is implemented by, for example, a touch panel, but may also be implemented by a hardware key, etc.

Time manager 45 manages a current time used in second information terminal 40. Stated differently, time manager 45 measures the current time. Time manager 45 is implemented by, for example, an RTC. When second information terminal 40 supports, for example, NITZ or Network Time Protocol (NTP), the current time managed by time manager 45 is corrected periodically. It should be noted that time manager 45 may be included in information processor 42. In other words, time manager 45 may be implemented as a function of information processor 42.

Control device 50 is a control device that controls the locking and unlocking of electric lock 60. Control device 50 is, for example, built into door 81 or a door frame. Control device 50 includes communicator 51, controller 52, storage 53, and time manager 54.

Communicator 51 is a communication circuit for control device 50 to communicate with each of first information terminal 20, management terminal 30, and second information terminal 40. Communicator 51 performs, for example, wireless communication with each of first information terminal 20, management terminal 30, and second information terminal 40 through a local communication network. Communicator 51 is also capable of performing wireless communication with management terminal 30 through a wide area communication network.

Controller 52 performs information processing for locking or unlocking electric lock 60. More specifically, controller 52 locks or unlocks electric lock 60 by outputting a control signal to electric lock 60. Controller 52 is implemented by, for example, a microcomputer, but may also be implemented by a processor. The functions of controller 52 are implemented by, for example, executing a computer program stored in storage 53, by a microcomputer, processor, or the like included in controller 52.

Storage 53 is a storage device in which information necessary for the above-described information processing and the above-described computer program, etc. are stored. Storage 53 is implemented, for example, by a semiconductor memory.

Time manager 54 manages a current time used in control device 50. Stated differently, time manager 54 measures the current time. Time manager 54 is implemented by, for example, an RTC. It should be noted that time manager 54 may be included in controller 52. In other words, time manager 54 may be implemented as a function of controller 52.

Electric lock 60 locks or unlocks door 81 based on a control signal output from controller 52. More specifically, electric lock 60 includes an electric motor and a transmission mechanism that transmits the driving force of the electric motor to the deadbolt. The driving force of the electric motor is transmitted to the deadbolt via the transmission mechanism, thereby causing the deadbolt to move to the locked or unlocked position.

### Operation Example 1

Next, operation example 1 of information processing system 10 will be described. FIG. 3 and FIG. 4 are sequence diagrams of operation example 1 of information processing system 10. The following operation example 1 will be described as first information terminal 20 being used by a visitor to facility 80, and management terminal 30 being used by the manager or the like of facility 80. The visitor is, for example, a person dispatched by a housekeeping service provider, a package delivery person, or the like.

First, the operation until a server certificate is stored in storage 23 of first information terminal 20 will be described with reference to FIG. 3. The server certificate serves as a permit to unlock electric lock 60. As illustrated in FIG. 3, public key A and private key A corresponding to public key A are stored in storage 23 of first information terminal 20. Public key A and private key A are generated, for example, when an application program (hereinafter also referred to simply as application) for using information processing system 10 is installed on first information terminal 20, and stored in storage 23.

In addition, public key B and private key B corresponding to public key B are stored in storage 33 of management terminal 30. Public key B and private key B are stored in storage 33, for example, when an application for using information processing system 10 is installed on management terminal 30.

First, the visitor performs a predetermined operation on operation receiver 24 of first information terminal 20 which is running the above-described application. The predetermined operation is the operation to install a server certificate. Operation receiver 24 receives the predetermined operation (S11).

When the predetermined operation is received by operation receiver 24, information processor 22 generates an issuance request which is a request to issue a server certificate, and causes communicator 21 to transmit the generated issuance request to management terminal 30. The issuance request includes public key A. In other words, communicator 21 transmits public key A to management terminal 30 (S12). It should be noted that communicator 21 transmits public key A to management terminal 30 through wireless communication through a wide area communication network.

Communicator 31 of management terminal 30 receives the issuance request including public key A. When the manager confirms the issuance request of the visitor and permits the visitor to unlock electric lock 60, information processor 32 generates a signature for the received public key A and a condition of use, using private key B (S13). In addition, information processor 32 causes communicator 31 to transmit the server certificate including public key A, the condition of use, and the signature to first information terminal 20 (S14). The condition of use is, for example, information indicating a time period requirement (in other words, a validity period), which is predetermined by, for example, the manager, etc. using management terminal 30. The time period requirement specifies, for example, a start point and an end point for the server certificate to be valid, but it is sufficient if at least the end point is specified.

It should be noted that the X.509 certificate, for example, is used as the format of the server certificate. FIG. 5 is a diagram illustrating an example of the format of the server certificate. In FIG. 5, the validity period of the certificate corresponds to the above-described condition of use (time period requirement), subject public key information corresponds to public key A, and signatureValue corresponds to the signature. It should be noted that a condition of use other than the validity period may be stored in the extension area of the format in FIG. 5.

Communicator 21 of first information terminal 20 receives the server certificate. Information processor 22 stores the received server certificate in storage 23 (S15).

Next, the operation until electric lock 60 is unlocked using a server certificate will be described with reference to FIG. 4. As illustrated in FIG. 4, a root certificate is stored in storage 53 of control device 50. The root certificate includes public key B. The root certificate is, for example, generated by information processor 32 of management terminal 30 and transmitted to control device 50 by communicator 31, thereby being stored in storage 53. The root certificate may be stored in storage 53 by the manufacturing facility at the time of manufacture of control device 50.

In addition, control device 50 transmits a beacon signal for indicating the presence of control device 50 at a predetermined time interval. The beacon signal is also referred to, for example, an advertise signal in some cases.

A visitor approaches door 81 and performs, on operation receiver 24 of first information terminal 20 which is running the above-described application, a predetermined unlocking operation to unlock electric lock 60. Operation receiver 24 receives the unlocking operation (S16). It should be noted that door 81 is, for example, a door provided in a private area of facility 80 (see FIG. 1), but door 81 may also be a door provided at the entrance of facility 80 or a door provided in a common area other than the entrance.

When operation receiver 24 receives the unlocking operation, first information terminal 20 receives the beacon signal transmitted by control device 50 (S17). It should be noted that the beacon signal is transmitted at a predetermined time interval, and thus the processing of step S17 (the processing of receiving the beacon signal) may be performed prior to step S16. Information processor 22 obtains a current time managed by time manager 25 (S18), and causes communicator 21 to transmit current time information indicating the obtained current time to control device 50, as a response to the reception of the beacon signal. In other words, communicator 21 transmits the current time information to control device 50 (S19). Communicator 51 of control device 50 receives the current time information. The current time information is temporarily stored in a volatile memory (not illustrated), for example, included in control device 50.

Although a detailed illustration is omitted, as a result of predetermined processes including the processes of steps S17 and S18 having been performed, the connection for the wireless communication is established between first information terminal 20 (communicator 21) and control device 50 (communicator 51). This wireless communication is the wireless communication through a local communication network, and is, for example, short-distance wireless communication based on communication standards such as Bluetooth (registered trademark).

Information processor 22 then causes communicator 21 to transmit the server certificate to control device 50. In other words, communicator 21 transmits the server certificate to control device 50 (S20).

Communicator 51 of control device 50 receives the server certificate. Controller 52 verifies the signature included in the received server certificate, using public key B included in the root certificate stored in storage 53 (S21). When the signature is successfully verified, controller 52 determines whether first information terminal 20 is an information terminal having setting authority (S22). The setting authority is one example of predetermined authority; in other words, the setting authority is manager authority. For example, information indicating having or not having setting authority is stored in the extension area (illustrated in FIG. 5) of the server certificate, and controller 52 is capable of determining whether first information terminal 20 is an information terminal having setting authority, based on the server certificate that has been received.

In information processing system 10, the setting authority is granted to management terminal 30 (manager) and second information terminal 40 (resident), but is not granted to first information terminal 20 (visitor). Accordingly, in the server certificate issued to first information terminal 20, information indicating that first information terminal 20 does not have the setting authority is stored. Controller 52 thus determines in step S22 that first information terminal 20 does not have the setting authority.

Next, controller 52 determines the condition of use included in the server certificate (S23). As described above, the condition of use is a time period requirement, for example. Controller 52 determines whether the current time indicated by the current time information (the current time information temporarily stored) received in step S19 and the current time managed by time manager 54 each satisfy the time period requirement (i.e., whether the two current times are each within a validity period).

When controller 52 determines that the time period requirement is satisfied, controller 52 generates a session key using public key A included in the server certificate (S24). Controller 52 encrypts the generated session key with public key A, and causes communicator 51 to transmit the encrypted session key to first information terminal 20 (S25).

Communicator 21 of first information terminal 20 receives the encrypted session key. Information processor 22 decrypts the session key using private key A, and causes communicator 21 to transmit an unlock command to control device 50 by encrypted communication using the session key (S26).

Communicator 51 of control device 50 receives the unlock command. Controller 52 unlocks electric lock 60 based on the received unlock command (S27). More specifically, controller 52 unlocks electric lock 60 by transmitting a control signal to electric lock 60. In the case where the verification of the signature is failed in step S21 and where the time period requirement is determined not to be satisfied in step S23, the subsequent processes are not carried out, and thus electric lock 60 is not unlocked. It should be noted that first information terminal 20 is also capable of locking electric lock 60 based on a similar sequence of operation.

As described above, in information processing system 10, management terminal 30 is capable of securely authorizing first information terminal 20 to unlock electric lock 60, using the server certificate and the root certificate. The visitor can unlock electric lock 60 using first information terminal 20.

### Operation Example 2

Next, operation example 2 of information processing system 10 will be described. FIG. 6 is a sequence diagram of operation example 2 of information processing system 10. In operation example 2 described below, electric lock 60 is unlocked using second information terminal 40. Second information terminal 40 is an information terminal used by a resident of facility 80.

As illustrated in FIG. 6, public key C and private key C corresponding to public key C are stored in storage 43 of second information terminal 40. Public key C and private key C are, for example, generated when an application for using information processing system 10 is installed in second information terminal 40, and stored in storage 43.

In addition, it is assumed that a server certificate issued by management terminal 30 through processes substantially equivalent to the processes indicated in FIG. 3 of operation example 1 is stored in advance in storage 43. This server certificate includes public key C, a condition of use, and a signature that is a signature for public key C and the condition of use, and is generated using private key B. It should be noted that, in the same manner as operation example 1, a root certificate including public key B is stored in storage 53 of control device 50.

The processes in step S31 to step S36 are substantially equivalent to the processes in step S16 to step S21 illustrated in FIG. 4, and thus the detailed description thereof will be omitted.

When the signature is successfully verified in step S36, controller 52 determines whether second information terminal 40 is an information terminal having setting authority (S37). For example, information indicating having or not having setting authority is stored in the extension area (illustrated in FIG. 5) of the server certificate, and controller 52 is capable of determining whether second information terminal 40 is an information terminal having setting authority, based on the server certificate that has been received.

Since second information terminal 40 is an information terminal used by the resident, in the server certificate issued to second information terminal 40, information indicating that second information terminal 40 has setting authority is stored Accordingly, in step S37, controller 52 determines that second information terminal 40 has the setting authority.

Next, controller 52 determines the condition of use included in the server certificate (S38). As described above, the condition of use is a time period requirement, for example. Controller 52 determines whether the current time information (the current time information temporarily stored) received in step S34 satisfies the time period requirement. Unlike operation example 1, it is determined in step S37 that second information terminal 40 has the setting authority in operation example 2, and thus whether the current time managed by time manager 54 included in control device 50 satisfies the time period requirement is not determined.

When controller 52 determines that the time period requirement is satisfied, controller 52 generates a session key using public key C included in the server certificate (S39). Controller 52 encrypts the generated session key with public key C, and causes communicator 51 to transmit the encrypted session key to first information terminal 20 (S40). In addition, controller 52 corrects the current time managed by time manager 54 to the current time indicated by the current time information (the current time information temporarily stored) received in step S34 (time synchronization process) (S41).

Communicator 41 of second information terminal 40 receives the encrypted session key transmitted in step S40. Information processor 42 decrypts the session key using private key C, and causes communicator 41 to transmit an unlock command to control device 50 by encrypted communication using the session key (S42).

Communicator 51 of control device 50 receives the unlock command. Controller 52 unlocks the electric lock based on the received unlock command (S43). More specifically, controller 52 unlocks electric lock 60 by transmitting a control signal to electric lock 60. In the case where the verification of the signature is failed in step S36 and where the time period requirement is determined not to be satisfied in step S37, the subsequent processes are not carried out, and thus electric lock 60 is not unlocked. It should be noted that second information terminal 40 is also capable of locking electric lock 60 based on a similar sequence of operation.

As described above, in information processing system 10, the resident can unlock electric lock 60 using second information terminal 40.

### Operation example 3

Next, operation example 3 of information processing system 10 will be described. FIG. 7 is a sequence diagram of operation example 3 of information processing system 10. In operation example 3 described below, electric lock 60 is unlocked using management terminal 30. Management terminal 30 is an information terminal used by a manager or the like of facility 80.

As illustrated in FIG. 7, public key B and private key B corresponding to public key B are stored in storage 33 of management terminal 30. In addition, it is assumed that a server certificate generated by management terminal 30 (information processor 32) is stored in advance in storage 33. This server certificate includes public key B, a condition of use, and a signature that is a signature for public key B and the condition of use, and is generated using private key B. It should be noted that, in the same manner as operation example 1 and operation example 2, a root certificate including public key B is stored in storage 53 of control device 50.

The processes in step S51 to step S56 are substantially equivalent to the processes in step S16 to step S21 illustrated in FIG. 4, or step S31 to step S36 illustrated in FIG. 6, and thus the detailed description thereof will be omitted.

When the signature is successfully verified instep S56, controller 52 determines whether management terminal 30 is an information terminal having setting authority (S57). For example, information indicating having or not having setting authority is stored in the extension area (illustrated in FIG. 5) of the server certificate, and controller 52 is capable of determining whether management terminal 30 is an information terminal having setting authority, based on the server certificate that has been received.

Since management terminal 30 is an information terminal used by the manager, etc., in the server certificate issued to management terminal 30, information indicating that management terminal 30 has setting authority is stored Accordingly, in step S57, controller 52 determines that management terminal 30 has the setting authority.

Next, controller 52 determines the condition of use included in the server certificate (S58). As described above, the condition of use is a time period requirement, for example. Controller 52 determines whether the current time information (the current time information temporarily stored) received in step S54 satisfies the time period requirement. Unlike operation example 1, it is determined in step S57 that management terminal 30 has the setting authority in operation example 3, and thus whether the current time managed by time manager 54 included in control device 50 satisfies the time period requirement is not determined. Operation example 3 is the same in this point as operation example 2.

When controller 52 determines that the time period requirement is satisfied, controller 52 generates a session key using public key C included in the server certificate (S59). Controller 52 encrypts the generated session key with public key C, and causes communicator 51 to transmit the encrypted session key to management terminal 30 (S60). In addition, controller 52 corrects the current time managed by time manager 54 to the current time indicated by the current time information (the current time information temporarily stored) received in step S54 (time synchronization process) (S61).

Communicator 31 of management terminal 30 receives the encrypted session key transmitted in step S60. Information processor 32 decrypts the session key using private key B, and causes communicator 31 to transmit an unlock command to control device 50 by encrypted communication using the session key (S62).

Communicator 51 of control device 50 receives the unlock command. Controller 52 unlocks the electric lock based on the received unlock command (S63). More specifically, controller 52 unlocks electric lock 60 by transmitting a control signal to electric lock 60. In the case where the verification of the signature is failed in step S56 and where the time period requirement is determined not to be satisfied in step S57, the subsequent processes are not carried out, and thus electric lock 60 is not unlocked. It should be noted that management terminal 30 is also capable of locking electric lock 60 based on a similar sequence of operation.

As described above, in information processing system 10, the manager, etc. can unlock electric lock 60 using management terminal 30.

### Summary of Operation Example 1 to Operation Example 3

When control device 50 is not always connected to a wide area communication network (e.g., when control device 50 does not have the function of connecting communication with a wide area communication network), after a lapse of a certain period of time, deviation occurs in the current time managed by time manager 54. Even in the case where time manager 54 is implemented by an RTC, deviation occurs after a lapse of a long period of time. There is room for consideration as to how to correct the deviation of the current time managed by time manager 54 of control device 50.

In view of the above, as described in operation example 1 to operation example 3, when an information terminal that has requested unlocking of electric lock 60 has setting authority (see FIG. 6 and FIG. 7), controller 52 of control device 50 regards the current time managed by the time manager of the information terminal that has requested unlocking of electric lock 60 as a correct current time, and determines the condition of use using the current time, and thus the current time managed by time manager 54 is not used for the determination of the condition of use. In this manner, it is possible to make a correct determination even when there is deviation in the current time managed by time manager 54.

In addition, when an information terminal that has requested unlocking of electric lock 60 has setting authority, controller 52 corrects the current time managed by time manager 54 to the current time managed by the time manager of the information terminal that has requested unlocking of electric lock 60. In this manner, every time the information terminal having setting authority requests unlocking of electric lock 60, the current time is corrected to the time considered to be correct.

On the other hand, when an information terminal that has requested unlocking of electric lock 60 does not have setting authority (see FIG. 4), controller 52 does not regard the current time managed by the time manager of the information terminal that has requested unlocking of electric lock 60 as a correct current time, and determines the condition of use using both this current time and the current time managed by time manager 54. In this manner, it is possible to inhibit unauthorized access due to an expired server certificate as well as to improve the availability of information processing system 10. It should be noted that, when an information terminal that has requested unlocking of electric lock 60 does not have setting authority, the current time managed by time manager 54 is not corrected.

### Operation Example 4

Next, operation example 4 of information processing system 10 will be described. FIG. 8 and FIG. 9 are sequence diagrams of operation example 4 of information processing system 10. In the following operation example 4, management terminal 30 functions as a root certification authority (CA) and second information terminal 40 functions as an intermediate CA. The following operation example 4 will be described as first information terminal 20 being used by a visitor to facility 80, and management terminal 30 being used by a manager of facility 80 (e.g., an owner of facility 80 or an employee of a facility management agent for facility 80). Second information terminal 40 will be described as being used by a resident of facility 80, for example.

First, the operation until an intermediate certificate is stored in storage 43 of second information terminal 40 will be described with reference to FIG. 8. As illustrated in FIG. 8, public key B and private key B are stored in storage 33 of management terminal 30. Public key C and private key C are stored in storage 43 of second information terminal 40. Public key A and private key A are stored in storage 23 of first information terminal 20.

First, information processor 42 of second information terminal 40 generates an issuance request which is a request to issue an intermediate certificate, based on an operation performed by a resident, etc., and causes communicator 41 to transmit the generated issuance request to management terminal 30. The issuance request includes public key C. In other words, communicator 41 transmits public key C to management terminal 30 (S71). It should be noted that communicator 41 transmits public key C to management terminal 30 through communication through a wide area communication network.

Communicator 31 of management terminal 30 receives the issuance request including public key C. When the meaner confirms the issuance request of the resident and permits the resident to issue a server certificate, information processor 32 generates a first signature for the received public key C and a first condition of use, using private key B (S72). In addition, information processor 32 causes communicator 31 to transmit the intermediate certificate including public key C, the first condition of use, and the first signature to second information terminal 40 (S73). The first condition of use is, for example, information indicating a first time period requirement (in other words, a validity period), which is predetermined by, for example, the manager, etc. using management terminal 30.

It should be noted that the above-described X.509 certificate as illustrated in FIG. 5, for example, is used as the format of the intermediate certificate.

Communicator 41 of second information terminal 40 receives the intermediate certificate. Information processor 42 stores the received intermediate certificate in storage 43 (S74).

Then, the visitor performs a predetermined operation on operation receiver 24 of first information terminal 20 which is running the above-described application. The predetermined operation is the operation to install the server certificate and the intermediate certificate. Operation receiver 24 receives the predetermined operation (S75).

When the unlocking operation is received by operation receiver 24, information processor 22 generates an issuance request which is a request to issue the server certificate and the intermediate certificate, and causes communicator 21 to transmit the generated issuance request to second information terminal 40. The issuance request includes public key A. In other words, communicator 21 transmits public key A to second information terminal 40 (S76). It should be noted that communicator 21 transmits public key A to second information terminal 40 through wireless communication through a wide area communication network.

Communicator 41 of second information terminal 40 receives the issuance request including public key A. When the resident confirms the issuance request of the visitor and permits the visitor to unlock electric lock 60, information processor 42 generates a second signature for the received public key A and the second condition of use, using private key C (S77). In addition, information processor 42 causes communicator 41 to transmit: the server certificate including public key A, the second condition of use, and the second signature; and the intermediate certificate received in step S73 (in other words, stored in storage 43) to first information terminal 20 (S78). The second condition of use is, for example, information indicating a second time period requirement (in other words, a validity period), which is predetermined by, for example, the resident, etc. using second information terminal 40. It should be noted that the X.509 certificate, for example, is used as the format of the server certificate.

Communicator 21 of first information terminal 20 receives the server certificate and the intermediate certificate. Information processor 22 stores the received server certificate and the intermediate certificate in storage 23 (S79).

Next, the operation until electric lock 60 is unlocked using the server certificate and the intermediate certificate will be described with reference to FIG. 9. As illustrated in FIG. 9, a root certificate including public key B is stored in storage 53 of control device 50.

The processes in step S80 to step S83 are substantially equivalent to the processes in step S16 to step S19 illustrated in FIG. 4, and thus the detailed description thereof will be omitted.

Subsequent to step S83, information processor 22 causes communicator 21 to transmit the server certificate and the intermediate certificate to control device 50. In other words, communicator 21 transmits the server certificate and the intermediate certificate to control device 50 (S84).

Communicator 51 of control device 50 receives the server certificate and the intermediate certificate. Controller 52 verifies the first signature included in the received intermediate certificate, using public key B included in the root certificate stored in storage 53 (S85). When the first signature is successfully verified, controller 52 determines whether first information terminal 20 is an information terminal having setting authority (S86). For example, information indicating having or not having setting authority is stored in the extension area (illustrated in FIG. 5) of the server certificate or the intermediate certificate, and controller 52 is capable of determining whether first information terminal 20 is an information terminal having setting authority, based on the server certificate or the intermediate certificate that has been received.

In the server certificate or the intermediate certificate issued to first information terminal 20, information indicating that first information terminal 20 does not have the setting authority is stored. Accordingly, in step S86, controller 52 determines that first information terminal 20 does not have the setting authority.

Next, controller 52 determines the first condition of use included in the intermediate certificate (S87). As described above, the first condition of use is a first time period requirement, for example. Controller 52 determines whether the current time indicated by the current time information (the current time information temporarily stored) received in step S83 and the current time managed by time manager 54 each satisfy the first time period requirement (i.e., whether the two current times are each within a validity period).

When the first condition of use is successfully determined, controller 52 verifies the second signature included in the received server certificate, using public key C included in the intermediate certificate (S88). When the second signature is successfully verified, controller 52 determines the second condition of use included in the server certificate (S89). As described above, the second condition of use is a second time period requirement, for example. Controller 52 determines whether the current time indicated by the current time information (the current time information temporarily stored) received in step S83 and the current time managed by time manager 54 each satisfy the second time period requirement (i.e., whether the two current times are each within a validity period).

The processes in subsequent Steps S90 through S93 are performed in the same manner as the processes performed in Steps S24 through S27 in operation example 1, and finally electric lock 60 is unlocked. In the case where the verification of the first signature is failed in step S85, in the case where the first time period requirement is determined not to be satisfied in step S87, in the case where the verification of the second signature is failed in step S88, and in the case where the second time period requirement is determined not to be satisfied in step S89, the subsequent processes are not carried out, and thus electric lock 60 is not unlocked. It should be noted that first information terminal 20 is also capable of locking electric lock 60 based on a similar sequence of operation.

As described above, in information processing system 10, second information terminal 40 is capable of authorizing first information terminal 20 to unlock electric lock 60. As described above, when the user of second information terminal 40 is a resident, the resident can unlock electric lock 60 of the private area on which the resident has a contract while residing in facility 80, and can permit a visitor to unlock electric lock 60 of the private area while residing in facility 80. It should be noted that the server certificate issued by second information terminal 40 can be invalidated by management terminal 30.

### [Variation]

The object of control of control device 50 is not limited to electric lock 60. It is sufficient if control device 50 controls any device that restricts entry into or exit from a space in facility 80. For example, the object of control of control device 50 may be an automatic door. FIG. 10 is an external view of control device 50 according to a variation. As illustrated in FIG. 10, control device 50 may be a device that controls the opening and closing of automatic door 70 provided at the entrance of facility 80.

In addition, control device 50 may control a device that restricts the entry or exit of a product, in place of the device such as electric lock 60 or automatic door 70 that restricts the entry or exit of a person to or from a space in facility 80. For example, control device 50 may control an electric lock that locks and unlocks the door of a delivery box, a coin-operated locker, a safe-deposit box, or the like. In other words, it is sufficient if control device 50 controls a device that restricts the entry or exit of a product or a person to or from the space. Here, the space is any closed space located in facility 80.

In addition, information processing system 10 can be applied not only to devices that restrict the entry or exit of a product or a person to or from a space, but also to the case where only a certain person is permitted to control home appliances, such as a lighting device and an air conditioning equipment.

In addition, according to the foregoing embodiment, the condition of use is included in the server certificate. However, the condition of use may be transmitted from first information terminal 20, management terminal 30, or second information terminal 40 to control device 50 in a secure manner separated from the server certificate.

For example, in FIG. 4, the condition of use may be transmitted from first information terminal 20 to control device 50 together with the signature of management terminal 30 by encrypted communication using a session key (performed subsequent to step S24). As a result of separating the server certificate and the condition of use, it is possible to flexibly add or change the condition of use without having to reissue the server certificate. This technique can be applied not only to operation example 1 but also to operation example 2 to operation example 4.

In addition, although not illustrated in the above-described embodiment, after transmitting the server certificate in step S20 illustrated in FIG. 4, control device 50 (controller 52) may transmit pseudo information including a random number to first information terminal 20, and first information terminal 20 may sign the received pseudo information with private key A and transmit the signed pseudo information to control device 50. Control device 50 is capable of preventing the certificate from being fraudulently used, by verifying the signature received from first information terminal 20 using public key A included in the server certificate, in the first step performed between Step S21 and Step S22. This technique can be applied not only to operation example 1 but also to operation example 2 to operation example 4.

In addition, control device 50 (controller 5) may verify the ID of control device 50 included in the server certificate in step S20 illustrated in FIG. 4. In this manner, it is possible to prevent a certificate for another control device from being diverted. This technique can be applied not only to operation example 1 but also to operation example 2 to operation example 4.

In addition, it has been described in the foregoing embodiment that, when an information terminal that has requested unlocking of electric lock 60 does not have setting authority, the current time managed by time manager 54 is not corrected (see operation example 1 and operation example 4). However, even when an information terminal that has requested unlocking of electric lock 60 does not have setting authority, if the current time indicated by the current time information and the current time managed by time manager 54 each satisfy the time period requirement, the current time managed by time manager 54 may be corrected.

For example, in operation example 1, when the current time indicated by the current time information received and the current time managed by time manager 54 each satisfy the time period requirement (step S23), controller 52 may correct the current time managed by time manager 54 to the current time indicated by the current time information received in step S19 (time synchronization process).

In the same manner as above, in operation example 4, when the current time indicated by the current time information and the current time managed by time manager 54 each satisfy the first time period requirement and the second time period requirement (step S87 and step S89), controller 52 may correct the current time managed by time manager 54 to the current time indicated by the current time information received in step S83.

In this manner, if the current time is corrected even when the information terminal that has requested unlocking of electric lock 60 does not have setting authority, it is possible to reduce the deviation of current time managed by time manager 54.

### [Advantageous Effects, Etc.]

Hereinafter, the inventions that can be achieved from the disclosure of this Specification will be exemplified, and advantageous effects, etc., yielded from the inventions exemplified will be described.

Invention 1 is information processing system 10 that is used to lift a restriction imposed by a device which restricts entry or exit of a product or a person to or from a space, information processing system 10 including: an information terminal; and a control device. In information processing system 10, the information terminal includes: a first time manager that manages a current time; a first storage in which a private key, a public key corresponding to the private key, and a server certificate are stored; and a first communicator that transmits current time information and the server certificate to the control device, the current time information indicating the current time, the server certificate includes the public key, a time period requirement, and a signature for the public key and the time period requirement, the signature being generated using the private key, and the control device includes: a second storage in which a root certificate including the public key is stored; a second communicator that receives the current time information and the server certificate from the information terminal; and a controller that verifies the signature included in the server certificate received, using the public key included in the root certificate stored in the second storage, and lifts the restriction imposed by the device, on condition that the signature is successfully verified and the current time indicated by the current time information received satisfies the time period requirement included in the server certificate received. Here, the information terminal, the first time manager, the first storage, the first communicator, the private key, and the public key correspond to management terminal 30, time manager 35, storage 33, communicator 31, private key B, and public key B according to the above-described embodiment. Here, the control device, the second communicator, the second storage, and the controller correspond to control device 50, communicator 51, storage 53, and controller 52 according to the above-described embodiment.

Information processing system 10 as described above is capable of lifting the restriction on the entry or exit of a product or a person in consideration of a time period requirement.

Invention 2 is information processing system 10 that is used to lift a restriction imposed by a device which restricts entry or exit of a product or a person to or from a space, information processing system 10 including: an information terminal; and a control device. In information processing system 10, the information terminal includes: a first time manager that manages a current time; a first storage in which a first private key, a first public key corresponding to the first private key, and a server certificate are stored; and a first communicator that transmits current time information and the server certificate to the control device, the current time information indicating the current time, the server certificate includes the first public key, a time period requirement, and a signature for the first public key and the time period requirement, the signature being generated using a second private key, and the control device includes: a second storage in which a root certificate including a second public key corresponding to the second private key is stored; a second communicator that receives the current time information and the server certificate from the information terminal; and a controller that verifies the signature included in the server certificate received, using the second public key included in the root certificate stored in the second storage, and lifts the restriction imposed by the device, on condition that the signature is successfully verified and the current time indicated by the current time information received satisfies the time period requirement included in the server certificate received. Here, the information terminal, the first time manager, the first storage, the first communicator, the first private key, and the first public key correspond to first information terminal 20, time manager 25, storage 23, communicator 21, private key A, and public key A according to the above-described embodiment, or correspond to second information terminal 40, time manager 45, storage 43, communicator 41, private key C, and public key C according to the above-described embodiment. Here, the control device, the second communicator, the second storage, the controller, the second private key, and the second public key correspond to control device 50, communicator 51, storage 53, controller 52, private key B, and public key B according to the above-described embodiment.

Information processing system 10 as described above is capable of lifting the restriction on the entry or exit of a product or a person in consideration of a time period requirement.

Invention 3 is information processing system 10 according to Invention 1 or 2, and in information processing system 10, the control device includes a second time manager that manages a current time, and the controller corrects the current time managed by the second time manager to the current time indicated by the current time information, on condition that the signature is successfully verified and the current time indicated by the current time information satisfies the time period requirement. Here, the second time manager corresponds to time manager 54 according to the above-described embodiment.

Information processing system 10 as described above is capable of correcting the current time managed by the second time manager, when lifting the restriction on the entry or exit of a product or a person.

Invention 4 is information processing system 10 according to Invention 2, and in information processing system 10, the control device includes a second time manager that manages a current time, and the controller lifts the restriction imposed by the device, on condition that the signature is successfully verified and the current time indicated by the current time information and the current time managed by the second time manager each satisfy the time period requirement.

Information processing system 10 as described above is capable of inhibiting unauthorized access.

Invention 5 is information processing system 10 according to Invention 4, and in information processing system 10, the controller corrects the current time managed by the second time manager to the current time indicated by the current time information, on condition that the current time indicated by the current time information and the current time managed by the second time manager each satisfy the time period requirement.

Information processing system 10 as described above is capable of correcting the current time managed by the second time manager when lifting the restriction on the entry or exit of a product or a person.

Invention 6 is information processing system 10 according to Invention 2, and in information processing system 10, the control device includes a second time manager that manages a current time, and the controller: determines whether the information terminal has predetermined authority; when determining that the information terminal has the predetermined authority, lifts the restriction imposed by the device, on condition that the signature is successfully verified and the current time indicated by the current time information received satisfies the time period requirement included in the server certificate received; and when determining that the information terminal does not have the predetermined authority, lifts the restriction imposed by the device, on condition that the signature is successfully verified and the current time indicated by the current time information and the current time managed by the second time manager each satisfy the time period requirement. Here, the predetermined authority is the setting authority according to the above-described embodiment.

Information processing system 10 as described above is capable of changing the determination reference for lifting the restriction on the entry or exit of a product or a person, according to whether the information terminal has predetermined authority.

Invention 7 is information processing system 10 according to Invention 6, and in information processing system 10, the controller: when determining that the information terminal has the predetermined authority, corrects the current time managed by the second time manager to the current time indicated by the current time information; and when determining that the information terminal does not have the predetermined authority, corrects the current time managed by the second time manager to the current time indicated by the current time information, on condition that the current time indicated by the current time information and the current time managed by the second time manager each satisfy the time period requirement.

Information processing system 10 as described above is capable of correcting the current time managed by the second time manager, when lifting the restriction on the entry or exit of a product or a person.

Invention 8 is information processing system 10 that is used to lift a restriction imposed by a device which restricts entry or exit of a product or a person to or from a space, information processing system 10 including: an information terminal; and a control device. In information processing system 10, the information terminal includes: a first time manager that manages a current time; a first storage in which a first private key, a first public key corresponding to the first private key, an intermediate certificate, and a server certificate are stored; and a first communicator that transmits current time information, the intermediate certificate, and the server certificate to the control device, the current time information indicating the current time, the intermediate certificate includes a third public key, a first time period requirement, and a first signature for the third public key and the first time period requirement, the first signature being generated using a second private key, the server certificate includes the first public key, a second time period requirement, and a second signature for the first public key and the second time period requirement, the second signature being generated using a third private key corresponding to the third public key, the control device includes: a second time manager that manages a current time; a second storage in which a root certificate including a second public key corresponding to the second private key is stored; a second communicator that receives the current time information, the server certificate, and the intermediate certificate from the information terminal; and a controller that: verifies the first signature included in the intermediate certificate received, using the second public key included in the root certificate; verifies the second signature included in the server certificate received, using the third public key included in the intermediate certificate; and lifts the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received. Here, the information terminal, the first time manager, the first storage, and the first communicator correspond to first information terminal 20, time manager 25, storage 23, and communicator 21 according to the above-described embodiment. Here, the control device, the second time manager, the second communicator, the second storage, and the controller correspond to control device 50, time manager 54, communicator 51, storage 53, and controller 52 according to the above-described embodiment. Here, the first private key, the first public key, the second private key, the second public key, the third private key, and third public key correspond to private key A, public key A, private key B, public key B, private key C, and public key C according to the above-described embodiment.

Information processing system 10 as described above is capable of lifting the restriction on the entry or exit of a product or a person in consideration of a time period requirement.

Invention 9 is information processing system 10 according to Invention 8, and in information processing system 10, the controller corrects the current time managed by the second time manager to the current time indicated by the current time information, on condition that the current time indicated by the current time information and the current time managed by the second time manager each satisfy the first time period requirement and the second time period requirement.

Information processing system 10 as described above is capable of correcting the current time managed by the second time manager, when lifting the restriction on the entry or exit of a product or a person.

Invention 10 is information processing system 10 according to any one of Inventions 1 to 9, and in information processing system 10, the device is an electric lock provided on a door, and to lift the restriction imposed by the device is to unlock the electric lock. Here, the door and the electric lock correspond to door 81 and electric lock 60 according to the above-described embodiment.

Information processing system 10 as described above is capable of unlocking the electric lock in consideration of a time period requirement.

Invention 11 is information processing system 10 according to any one of Inventions 1 to 9, and in information processing system 10, the device is an automatic door, and to lift the restriction imposed by the device is to open the automatic door. Here, the automatic door corresponds to automatic door 70 according to the above-described embodiment.

Information processing system 10 as described above is capable of opening the automatic door in consideration of a time period requirement.

Invention 12 is a control device that communicates with an information terminal to lift a restriction imposed by a device which restricts entry or exit of a product or a person to or from a space, and is a control device (control device 50) included in information processing system 10 according to Invention 1.

Control device 50 as described above is capable of lifting the restriction on the entry or exit of a product or a person in consideration of a time period requirement.

Invention 13 is a control device that communicates with an information terminal to lift a restriction imposed by a device which restricts entry or exit of a product or a person to or from a space, and is a control device (control device 50) included in information processing system 10 according to Invention 2.

Control device 50 as described above is capable of lifting the restriction on the entry or exit of a product or a person in consideration of a time period requirement.

Invention 14 is a control device that communicates with an information terminal to lift a restriction imposed by a device which restricts entry or exit of a product or a person to or from a space, and is a control device (control device 50) included in information processing system 10 according to Invention 8.

Control device 50 as described above is capable of lifting the restriction on the entry or exit of a product or a person in consideration of a time period requirement.

Invention 15 is an information processing method executed by information processing system 10 that is used to lift a restriction imposed by a device which restricts entry or exit of a product or a person to or from a space, information processing system 10 including an information terminal and a control device, the information terminal including: a first time manager that manages a current time; and a first storage in which a private key, a public key corresponding to the private key, and a server certificate are stored, the server certificate including the public key, a time period requirement, and a signature for the public key and the time period requirement, the signature being generated using the private key, the control device including a second storage in which a root certificate including the public key is stored. The information processing method includes: transmitting, by the information terminal, current time information and the server certificate to the control device, the current time information indicating the current time; receiving, by the control device, the current time information and the server certificate from the information terminal; and verifying, by the control device, the signature included in the server certificate received, using the public key included in the root certificate stored in the second storage, and lifting, by the control device, the restriction imposed by the device, on condition that the signature is successfully verified and the current time indicated by the current time information received satisfies the time period requirement included in the server certificate received. Here, the information terminal, the first time manager, the first storage, the private key, and the public key correspond to management terminal 30, time manager 35, storage 33, private key B, and public key B according to the above-described embodiment. Here, the control device and the second storage correspond to control device 50 and storage 53 according to the above-described embodiment.

With the information processing method as described above, it is possible to lift the restriction on the entry or exit of a product or a person in consideration of a time period requirement.

Invention 16 is an information processing method executed by information processing system 10 that is used to lift a restriction imposed by a device which restricts entry or exit of a product or a person to or from a space, information processing system 10 including an information terminal and a control device, the information terminal including: a first time manager that manages a current time; and a first storage in which a first private key, a first public key corresponding to the first private key, and a server certificate are stored, the server certificate including the first public key, a time period requirement, and a signature for the first public key and the time period requirement, the signature being generated using a second private key, the control device including a second storage in which a root certificate including a second public key corresponding to the second private key is stored. The information processing method includes: transmitting, by the information terminal, current time information and the server certificate to the control device, the current time information indicating the current time; receiving, by the control device, the current time information and the server certificate from the information terminal; and verifying, by the control device, the signature included in the server certificate received, using the second public key included in the root certificate stored in the second storage, and lifting, by the control device, the restriction imposed by the device, on condition that the signature is successfully verified and the current time indicated by the current time information received satisfies the time period requirement included in the server certificate received. Here, the information terminal, the first time manager, the first storage, the first private key, and the first public key correspond to first information terminal 20, time manager 25, storage 23, private key A, and public key A, or correspond to second information terminal 40, time manager 45, storage 43, private key C, and public key C according to the above-described embodiment. Here, the control device, the second storage, the second private key, and the second public key correspond to control device 50, storage 53, private key B, and public key B according to the above-described embodiment.

With the information processing method as described above, it is possible to lift the restriction on the entry or exit of a product or a person in consideration of a time period requirement.

Invention 17 is an information processing method executed by information processing system 10 that is used to lift a restriction imposed by a device which restricts entry or exit of a product or a person to or from a space, information processing system 10 including an information terminal and a control device, the information terminal including: a first time manager that manages a current time; and a first storage in which a first private key, a first public key corresponding to the first private key, an intermediate certificate, and a server certificate are stored, the intermediate certificate including a third public key, a first time period requirement, and a first signature for the third public key and the first time period requirement, the first signature being generated using a second private key, the server certificate including the first public key, a second time period requirement, and a second signature for the first public key and the second time period requirement, the second signature being generated using a third private key corresponding to the third public key, the control device including: a second time manager that manages a current time; and a second storage in which a root certificate including a second public key corresponding to the second private key is stored. The information processing method includes: transmitting, by the information terminal, current time information, the intermediate certificate, and the server certificate to the control device, the current time information indicating the current time; receiving, by the control device, the current time information, the server certificate, and the intermediate certificate from the information terminal; and verifying, by the control device, the first signature included in the intermediate certificate received, using the second public key included in the root certificate; verifying, by the control device, the second signature included in the server certificate received, using the third public key included in the intermediate certificate; and lifting, by the control device, the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received. Here, the information terminal, the first time manager, and the first storage correspond to first information terminal 20, time manager 25, and storage 23 according to the above-described embodiment. Here, the control device, the second time manager, and the second storage correspond to control device 50, time manager 54, and storage 53 according to the above-described embodiment. Here, the first private key, the first public key, the second private key, the second public key, the third private key, and third public key correspond to private key A, public key A, private key B, public key B, private key C, and public key C according to the above-described embodiment.

With the information processing method as described above, it is possible to lift the restriction on the entry or exit of a product or a person in consideration of a time period requirement.

Invention 18 is a program for causing a computer to execute the information processing method according to any one of Inventions 15 to 17.

The program as described above is capable of lifting the restriction on the entry or exit of a product or a person in consideration of a time period requirement.

### (Other Embodiments)

Although the embodiments have been described thus far, the present invention is not limited to the above-described embodiments.

For example, in the above-described embodiments, the information processing system has been implemented by a plurality of devices, but the information processing system may be implemented as a single device. For example, the information processing system may be implemented as a single device corresponding to any of the first information terminal, the management terminal, the second information terminal, and the control device. When the information processing system is implemented by a plurality of devices, the structural components (in particular, the functional structural components) included in the information processing system may be distributed in any manner to the plurality of devices.

In addition, in the above-described embodiments, a process performed by a specific processing unit may be performed by a different processing unit. Furthermore, the order of a plurality of processes may be rearranged. Alternatively, the plurality of processes may be performed in parallel.

In addition, each of the structural components in the above-described embodiments may be implemented by executing a software program suitable for the structural component. Each of the structural components may be realized by means of a program executing unit, such as a CPU or a processor, reading and executing the software program recorded on a recording medium such as a hard disk or a semiconductor memory.

In addition, each of the structural components may be implemented by hardware. For example, each of the structural components may be a circuitry (or an integrated circuit). The circuitries may be configured as a single circuitry as a whole or may be mutually different circuitries. In addition, the circuitries may each be a general-purpose circuit, or may be a dedicated circuit.

In addition, the generic or specific aspects of the present invention may be implemented by a system, a device, a method, an integrated circuit, a computer program, or a computer-readable recording medium such as a compact disc read only memory (CD-ROM). Alternatively, the generic or specific aspects of the present invention may be implemented by any combination of systems, devices, methods, integrated circuits, computer programs, and recording medium.

For example, the present invention may be implemented as the first information terminal, the management terminal, the second information terminal, the control device, or the electric lock system (control device and electric lock) according to the above-described embodiments.

In addition, the present invention may be implemented as an information processing method executed by a computer such as the information processing system, the first information terminal, the management terminal, the second information terminal, and the control device according to the above-described embodiments. In addition, the present invention may be implemented as a program for causing a computer to execute the information processing method. The present invention may be implemented as a non-transitory computer-readable recording medium on which the above-described program is stored.

In addition, the present invention may be implemented as an application program for causing a general-purpose information terminal to function as the first information terminal, the management terminal, or the second information terminal according to the foregoing embodiments. The present invention may be implemented as a non-transitory computer-readable recording medium on which the above-described application program is stored.

It should be noted that the present invention also includes other forms in which various modifications apparent to those skilled in the art are applied to the embodiments or forms in which structural components and functions in the embodiments are arbitrarily combined within the scope of the present invention.

### [Reference Signs List]

10 information processing system
20 first information terminal
21, 31, 41, 51 communicator
22, 32, 42 information processor
23, 33, 43, 53 storage
24, 34, 44 operation receiver
25, 35, 45, 54 time manager
30 management terminal
40 second information terminal
50 control device
52 controller
60 electric lock
70 automatic door
80 facility
81 door

## Claims

1. An information processing system that is used to lift a restriction imposed by a device which restricts entry or exit of a product or a person to or from a space, the information processing system comprising:
an information terminal; and a control device, wherein
the information terminal includes:
a first time manager that manages a current time;
a first storage in which a private key, a public key corresponding to the private key, and a server certificate are stored; and
a first communicator that transmits current time information and the server certificate to the control device, the current time information indicating the current time,
the server certificate includes the public key, a time period requirement, and a signature for the public key and the time period requirement, the signature being generated using the private key, and
the control device includes:
a second storage in which a root certificate including the public key is stored;
a second communicator that receives the current time information and the server certificate from the information terminal; and
a controller that verifies the signature included in the server certificate received, using the public key included in the root certificate stored in the second storage, and lifts the restriction imposed by the device, on condition that the signature is successfully verified and the current time indicated by the current time information received satisfies the time period requirement included in the server certificate received.

2. An information processing system that is used to lift a restriction imposed by a device which restricts entry or exit of a product or a person to or from a space, the information processing system comprising:
an information terminal; and a control device, wherein
the information terminal includes:
a first time manager that manages a current time;
a first storage in which a first private key, a first public key corresponding to the first private key, and a server certificate are stored; and
a first communicator that transmits current time information and the server certificate to the control device, the current time information indicating the current time,
the server certificate includes the first public key, a time period requirement, and a signature for the first public key and the time period requirement, the signature being generated using a second private key, and
the control device includes:
a second storage in which a root certificate including a second public key corresponding to the second private key is stored;
a second communicator that receives the current time information and the server certificate from the information terminal; and
a controller that verifies the signature included in the server certificate received, using the second public key included in the root certificate stored in the second storage, and lifts the restriction imposed by the device, on condition that the signature is successfully verified and the current time indicated by the current time information received satisfies the time period requirement included in the server certificate received.

3. The information processing system according to claim 1 or 2, wherein
the control device includes a second time manager that manages a current time, and
the controller corrects the current time managed by the second time manager to the current time indicated by the current time information, on condition that the signature is successfully verified and the current time indicated by the current time information satisfies the time period requirement.

4. The information processing system according to claim 2, wherein
the control device includes a second time manager that manages a current time, and
the controller lifts the restriction imposed by the device, on condition that the signature is successfully verified and the current time indicated by the current time information and the current time managed by the second time manager each satisfy the time period requirement.

5. The information processing system according to claim 4, wherein
the controller corrects the current time managed by the second time manager to the current time indicated by the current time information, on condition that the current time indicated by the current time information and the current time managed by the second time manager each satisfy the time period requirement.

6. The information processing system according to claim 2, wherein
the control device includes a second time manager that manages a current time, and
the controller:
determines whether the information terminal has predetermined authority;
when determining that the information terminal has the predetermined authority, lifts the restriction imposed by the device, on condition that the signature is successfully verified and the current time indicated by the current time information received satisfies the time period requirement included in the server certificate received; and
when determining that the information terminal does not have the predetermined authority, lifts the restriction imposed by the device, on condition that the signature is successfully verified and the current time indicated by the current time information and the current time managed by the second time manager each satisfy the time period requirement.

7. The information processing system according to claim 6, wherein
the controller:
when determining that the information terminal has the predetermined authority, corrects the current time managed by the second time manager to the current time indicated by the current time information; and
when determining that the information terminal does not have the predetermined authority, corrects the current time managed by the second time manager to the current time indicated by the current time information, on condition that the current time indicated by the current time information and the current time managed by the second time manager each satisfy the time period requirement.

8. An information processing system that is used to lift a restriction imposed by a device which restricts entry or exit of a product or a person to or from a space, the information processing system comprising:
an information terminal; and a control device, wherein
the information terminal includes:
a first time manager that manages a current time;
a first storage in which a first private key, a first public key corresponding to the first private key, an intermediate certificate, and a server certificate are stored; and
a first communicator that transmits current time information, the intermediate certificate, and the server certificate to the control device, the current time information indicating the current time,
the intermediate certificate includes a third public key, a first time period requirement, and a first signature for the third public key and the first time period requirement, the first signature being generated using a second private key,
the server certificate includes the first public key, a second time period requirement, and a second signature for the first public key and the second time period requirement, the second signature being generated using a third private key corresponding to the third public key,
the control device includes:
a second time manager that manages a current time;
a second storage in which a root certificate including a second public key corresponding to the second private key is stored;
a second communicator that receives the current time information, the server certificate, and the intermediate certificate from the information terminal; and
a controller that: verifies the first signature included in the intermediate certificate received, using the second public key included in the root certificate; verifies the second signature included in the server certificate received, using the third public key included in the intermediate certificate; and lifts the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received.

9. The information processing system according to claim 8, wherein
the controller corrects the current time managed by the second time manager to the current time indicated by the current time information, on condition that the current time indicated by the current time information and the current time managed by the second time manager each satisfy the first time period requirement and the second time period requirement.

10. The information processing system according to any one of claims 1, 2, and 4 to 9, wherein
the device is an electric lock provided on a door, and
to lift the restriction imposed by the device is to unlock the electric lock.

11. The information processing system according to any one of claims 1, 2, and 4 to 9, wherein
the device is an automatic door, and
to lift the restriction imposed by the device is to open the automatic door.

12. A control device that communicates with an information terminal to lift a restriction imposed by a device which restricts entry or exit of a product or a person to or from a space,
the information terminal including:
a first time manager that manages a current time;
a first storage in which a private key, a public key corresponding to the private key, and a server certificate are stored; and
a first communicator that transmits current time information and the server certificate to the control device, the current time information indicating the current time,
the server certificate including the public key, a time period requirement, and a signature for the public key and the time period requirement, the signature being generated using the private key,
the control device comprising:
a second storage in which a root certificate including the public key is stored;
a second communicator that receives the current time information and the server certificate from the information terminal; and
a controller that verifies the signature included in the server certificate received, using the public key included in the root certificate stored in the second storage, and lifts the restriction imposed by the device, on condition that the signature is successfully verified and the current time indicated by the current time information received satisfies the time period requirement included in the server certificate received.

13. A control device that communicates with an information terminal to lift a restriction imposed by a device which restricts entry or exit of a product or a person to or from a space,
the information terminal including:
a first time manager that manages a current time;
a first storage in which a first private key, a first public key corresponding to the first private key, and a server certificate are stored; and
a first communicator that transmits current time information and the server certificate to the control device, the current time information indicating the current time,
the server certificate including the first public key, a time period requirement, and a signature for the first public key and the time period requirement, the signature being generated using a second private key,
the control device comprising:
a second storage in which a root certificate including a second public key corresponding to the second private key is stored;
a second communicator that receives the current time information and the server certificate from the information terminal; and
a controller that verifies the signature included in the server certificate received, using the second public key included in the root certificate stored in the second storage, and lifts the restriction imposed by the device, on condition that the signature is successfully verified and the current time indicated by the current time information received satisfies the time period requirement included in the server certificate received.

14. A control device that communicates with an information terminal to lift a restriction imposed by a device which restricts entry or exit of a product or a person to or from a space,
the information terminal including:
a first time manager that manages a current time;
a first storage in which a first private key, a first public key corresponding to the first private key, an intermediate certificate, and a server certificate are stored; and
a first communicator that transmits current time information, the intermediate certificate, and the server certificate to the control device, the current time information indicating the current time,
the intermediate certificate including a third public key, a first time period requirement, and a first signature for the third public key and the first time period requirement, the first signature being generated using a second private key,
the server certificate including the first public key, a second time period requirement, and a second signature for the first public key and the second time period requirement, the second signature being generated using a third private key corresponding to the third public key,
the control device comprising:
a second time manager that manages a current time;
a second storage in which a root certificate including a second public key corresponding to the second private key is stored;
a second communicator that receives the current time information, the server certificate, and the intermediate certificate from the information terminal; and
a controller that: verifies the first signature included in the intermediate certificate received, using the second public key included in the root certificate; verifies the second signature included in the server certificate received, using the third public key included in the intermediate certificate; and lifts the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received.

15. An information processing method executed by an information processing system that is used to lift a restriction imposed by a device which restricts entry or exit of a product or a person to or from a space,
the information processing system including an information terminal and a control device,
the information terminal including:
a first time manager that manages a current time; and
a first storage in which a private key, a public key corresponding to the private key, and a server certificate are stored,
the server certificate including the public key, a time period requirement, and a signature for the public key and the time period requirement, the signature being generated using the private key,
the control device including a second storage in which a root certificate including the public key is stored;
the information processing method comprising:
transmitting, by the information terminal, current time information and the server certificate to the control device, the current time information indicating the current time;
receiving, by the control device, the current time information and the server certificate from the information terminal; and
verifying, by the control device, the signature included in the server certificate received, using the public key included in the root certificate stored in the second storage, and lifting, by the control device, the restriction imposed by the device, on condition that the signature is successfully verified and the current time indicated by the current time information received satisfies the time period requirement included in the server certificate received.

16. An information processing method executed by an information processing system that is used to lift a restriction imposed by a device which restricts entry or exit of a product or a person to or from a space,
the information processing system including an information terminal and a control device,
the information terminal including:
a first time manager that manages a current time; and
a first storage in which a first private key, a first public key corresponding to the first private key, and a server certificate are stored,
the server certificate including the first public key, a time period requirement, and a signature for the first public key and the time period requirement, the signature being generated using a second private key,
the control device including
a second storage in which a root certificate including a second public key corresponding to the second private key is stored,
the information processing method comprising:
transmitting, by the information terminal, current time information and the server certificate to the control device, the current time information indicating the current time;
receiving, by the control device, the current time information and the server certificate from the information terminal; and
verifying, by the control device, the signature included in the server certificate received, using the second public key included in the root certificate stored in the second storage, and lifting, by the control device, the restriction imposed by the device, on condition that the signature is successfully verified and the current time indicated by the current time information received satisfies the time period requirement included in the server certificate received.

17. An information processing method executed by an information processing system that is used to lift a restriction imposed by a device which restricts entry or exit of a product or a person to or from a space,
the information processing system including an information terminal and a control device,
the information terminal including:
a first time manager that manages a current time; and
a first storage in which a first private key, a first public key corresponding to the first private key, an intermediate certificate, and a server certificate are stored,
the intermediate certificate including a third public key, a first time period requirement, and a first signature for the third public key and the first time period requirement, the first signature being generated using a second private key,
the server certificate including the first public key, a second time period requirement, and a second signature for the first public key and the second time period requirement, the second signature being generated using a third private key corresponding to the third public key,
the control device including:
a second time manager that manages a current time; and
a second storage in which a root certificate including a second public key corresponding to the second private key is stored,
the information processing method comprising:
transmitting, by the information terminal, current time information, the intermediate certificate, and the server certificate to the control device, the current time information indicating the current time;
receiving, by the control device, the current time information, the server certificate, and the intermediate certificate from the information terminal; and
verifying, by the control device, the first signature included in the intermediate certificate received, using the second public key included in the root certificate; verifying, by the control device, the second signature included in the server certificate received, using the third public key included in the intermediate certificate; and lifting, by the control device, the restriction imposed by the device, on condition that (i) the first signature and the second signature are each successfully verified and (ii) the current time indicated by the current time information received and the current time managed by the second time manager each satisfy the first time period requirement included in the intermediate certificate received and the second time period requirement included in the server certificate received.

18. A program for causing a computer to execute the information processing method according to any one of claims 15 to 17.
